# EUROPEAN PATENT SPECIFICATION

(11) **EP 3 988 344 B1**
(45) Date of publication and mention of the grant of the patent: **20.11.2024**
(21) Application number: 19935399.6
(22) Date of filing: 26.11.2019
(51) Int. Cl.: B60C 15/06, B60C 15/04

(54) **TIRE**
REIFEN
PNEU

(30) Priority: 24.06.2019 JP 2019116626
(43) Date of publication of application: 27.04.2022
(73) Proprietor: BRIDGESTONE CORPORATION, Chuo-ku Tokyo 104-8340 (JP)
(72) Inventor: TAKAGI, Kota, Tokyo 104-8340 (JP)
(74) Representative: Marks & Clerk LLP
(86) International application number: PCT/JP2019/046142
(87) International publication number: WO 2020/261599

(56) References cited:
- EP-A2- 0 890 459
- DE-T5- 112016 006 044
- JP-A- 2008 195 169
- JP-A- 2008 195 169
- JP-A- 2010 120 401
- JP-A- H0 285 002
- JP-A- H0 285 002
- JP-A- H1 120 422
- JP-A- H1 120 423
- JP-A- H1 120 423
- JP-A- S6 343 805
- JP-A- S6 387 304
- KR-B1- 100 553 081
- KR-B1- 100 553 081

## Description

### TECHNICAL FIELD

The present invention relates to tires, and more particularly to a tire capable of improving a durability of a heavy-load tire which is used in heavy-load vehicles such as extra-large dump trucks and the like.

### BACKGROURND

Conventionally, in tires used for heavy-load vehicles, there has been known a structure in which a wire chafer is arranged such as to cover an outer circumference of a carcass fixed by bead cores to thereby reinforce a bead portion (Patent Document 1).

Patent document 2 discloses a heavy duty pneumatic radial tire comprising a bead portion provided with a wire chafer having an outer end located outward over an outer end of a turnup portion of a carcass ply in a radial direction of the tire, and a bead core embedded in the bead portion.

Patent document 3 discloses a carcass having a rubber-covered radial arrangement code of 1 ply or more extending between the bead cores embedded in the pair of bead parts, and the carcass has a folded part that winds up around the bead core, and the bead that sandwiches the bead core. In a heavy-duty pneumatic radial tire having a bead reinforcement layer consisting of two rubber-covered steel cord layers, which are independent in both inside and outside areas, the bead reinforcement layer located in the outside area of the bead has its tire radius.

Patent document 4 discloses a pair of bead portions including at least a bead core, a carcass layer folded between bead cores and folded around the bead core, and folded around the carcass layer in the bead portion. A first wire chafer formed of metal and rubber, a second wire chafer disposed on the inner side in the tread width direction of the carcass layer in the bead portion, the first wire chafer formed of metal and rubber, and a third wire chafer disposed on the inner side in the tread width direction of the second wire chafer and formed of metal and rubber, and is an end portion located on the inner side in the tread width direction of the first wire chafer.

Patent document 5 discloses a tire having a bead core having a hexagonal pillar and having a bead portion formed by reinforcing the outside with a steel chafer. A split portion is formed in the steel chafer.

### CITATION DOCUMENT

### Patent Document

Patent Document 1: Japanese Unexamined Patent Application Publication No. 2016-43815;
Patent document 2: European Patent Application Publication No. 0890459 A1;
Patent document 3: Japanese Patent Application Publication No. H11 20423A;
Patent document 4: Japanese Patent Application Publication No. 2008 195169A; and
Patent Document 5: Korean Patent Publication No. 100553081B1.

### SUMMARY OF THE INVENTION

### Technical Problem

However, in recent years, for heavy-load vehicles such as trucks, there has been a demand for increasing a load amount without increasing the number of tires, and although there has been a demand for improving a load bearing performance per tire, however, it is difficult to meet these demands with a structure of the conventional bead portion. It is to be noted that the larger the load, the greater a deformation amount of a ground-contacted part of the tire becomes, and a carcass wound around a bead core deforms to be pressed against the bead core. At this time, a wire chafer provided on an outer circumference of the carcass acts to press the carcass against the bead core, and as the tire contacts the ground and leaves the ground repeatedly, the carcass is caused to be rubbed by the bead core, and eventually this may lead to break of the carcass. In particular, there is a risk that, when a contour shape of the bead core in a cross-sectional view is polygonal, such as square or hexagonal, the carcass is rubbed by a top part of the bead core, thus is more easily broken.

The present invention aims at providing a tire capable of minimizing the amount of deformation in the bead portion and improving the load-bearing performance.

### Solution to Problem

A tire according to claim 1 solves the above-mentioned problem.

### BRIEF DESCRIPTION OF THE DRAWINGS

FIG. 1 is an example of a cross-sectional view of a tire for a heavy-load vehicle;
FIGS. 2A and 2B are each an enlarged cross-sectional view of a bead portion;
FIG. 3 is a cross-sectional view of a bead core;
FIG. 4 is a schematic diagram illustrating a crossing state of carcass cords and chafer cords;
FIGS. 5A and 5B are schematic diagrams illustrating a deformation shape of the bead portion when a load is applied; and
FIG. 6 is a graph showing a result of analysis by FEM.

### DESCRIPTION OF EMBODIMENTS

Hereinafter, the present invention will be described in detail through embodiments of the invention; however, the following embodiments are not intended to limit the inventions set forth in the claims, and all of combinations of the features described in the embodiments are not necessarily essential to the solving means of the invention, but selectively employed configurations are included.

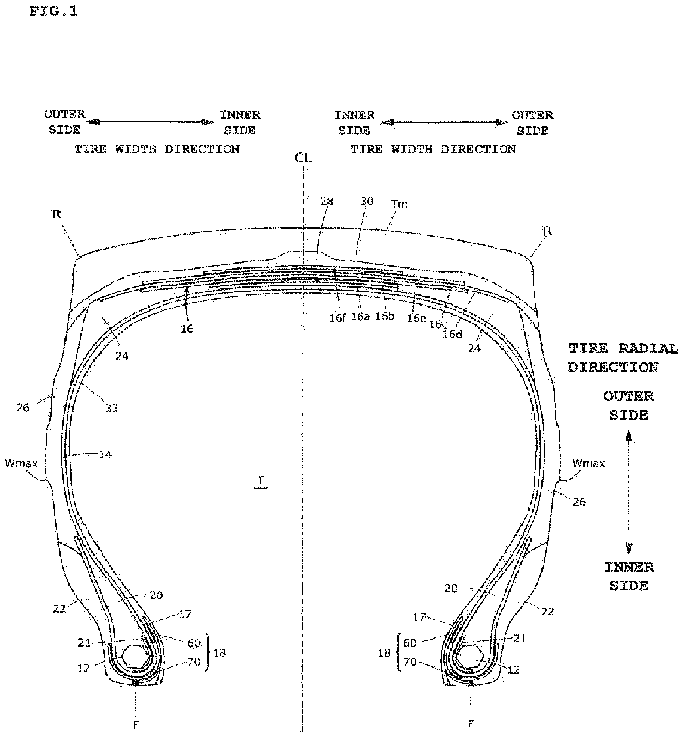

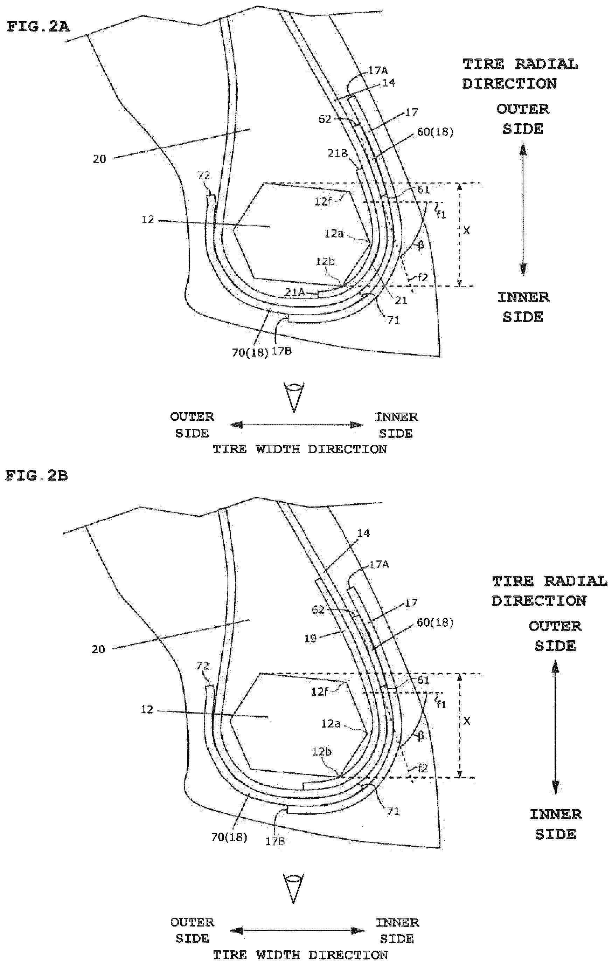

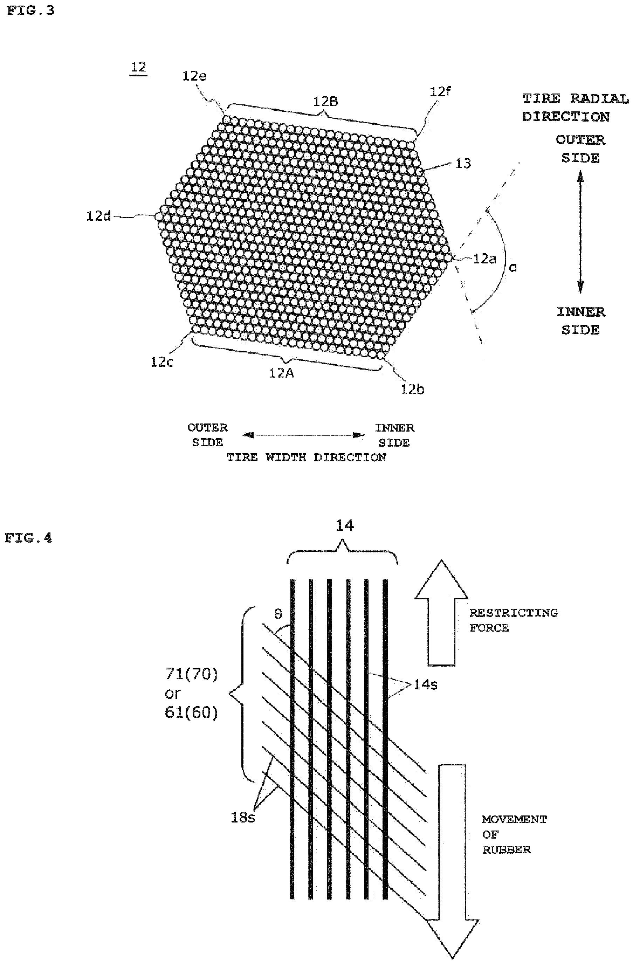

FIG. 1 is an example of a cross-sectional view of a tire for heavy-load vehicles. FIG. 2A is an enlarged cross-sectional view of a bead portion, and FIG. 3 is a cross-sectional view of a bead core in the bead portion. Hereinafter, a configuration of the tire according to an embodiment will be explained on the basis of the cross-sectional views illustrated in FIGS. 1 to FIG. 3. In the following description, as illustrated in Fig. 1, directions will be explained as a tire width direction and a tire radial direction. Further, with respect to the tire width direction, the direction is defined such that, in the direction of a paper surface, right and left are defined with a tire center CL as a center line separating to right and left, a tire center Cl side is defined as an inner side, and each end part Tt side of right and left-ground contact surfaces Tm is defined as an outer side, and so on. For convenience of explanation, a direction of rotation of the tire T is specified as shown by the arrows in the figure.

As illustrated in FIGS. 1 and 2A, the tire T includes a bead core 12, a carcass 14, a belt layer 16 formed of a plurality of belts, a nylon chafer 17 and a wire chafer 18, which are formed of mainly cord members, and a bead filler 20, a bead cover rubber 21, a rim cushion rubber 22, a belt under rubber 24, a side rubber 26, a base rubber 28, a tread rubber 30, and inner liner 32, which are formed of mainly rubber members.

The bead core 12 is provided in pair on the right and left- sides in the tire T. The bead core 12 is formed in a ring shape by winding the bead cord 13 a predetermined number of times. The bead core 12 is formed to have a contour shape, in a cross-sectional view, for example, to be a polygonal shape such as square or hexagon, or a circular shape and so on. In the present embodiment, as illustrated in FIG. 3, an explanation will be given particularly as to a case where the bead core is formed in a hexagonal shape.

The bead core 12 may be formed in the hexagonal shape, for example, by winding a bead cord 13 with a diameter of 1.0 mm to 4.0 mm 150 to 900 times. For the diameter of the bead cord 13, one size is selected, for example, from the above-mentioned range, such as 2.1 mm or 3.0 mm, taking a tire diameter into consideration. The bead cord 13 is formed to have a predetermined diameter, for example, by layer twisting or multi twisting of steel strands. The number of turns of the bead core 12 may be set from the above-mentioned range on the basis of the diameter of the bead cord 13 and the size of the tire T.

The bead core 12, which was formed into the hexagonal shape by having been wound as described above, is arranged so that one top part 12a is on the inner side in the tire width direction and a top part 12d, which is at a diagonal position of the top part 12a, protrudes on the outer side in the tire width direction. The bead core 12 may be formed so that an angle α of the top part 12a that protrudes toward the inner side in the tire width direction becomes, for example, 100 to 140 degrees. In other words, the cross-sectional shape of the bead core 12 may be hexagonal, but does not necessarily need to be regular hexagonal. When the bead core 12 is arranged in this way, upper and lower- sides 12A; 12B, which extend along the tire width direction, may be formed so that 7 to 28 bead cords 13 are lined up in a row.

The carcass 14 is configured, for example, of one or more layers of carcass plies, and is folded back so as to be rolled up from the inner side of the bead cores 12 provided on the right and left sides to the outer side, and extends in a toroidal shape between the right and left bead cores 12, so that carcass cords that form the carcass plies extend in the tire radial direction. End parts of the wound-up carcass 14 are set, for example, to terminate on the inner side in the tire radius direction inner than a maximum width Wmax of the tire T, or on the outer side in the tire radial direction outer than the maximum width Wmax, or at the maximum width Wmax.

It is preferable to use the carcass cords, which form the carcass 14, having an outer diameter of, for example, about 2 mm to 5.5 mm. Further, it is also preferable to set the number of driving of the carcass cords into the carcass 14 to be 5 to 4 per unit, for example.

The carcass 14 is set so that, when the carcass 14 is assembled to a proper rim and a predetermined internal pressure is applied, an angle of an inner circumferential surface side at a side of the bead core 12 and above the above-mentioned top part 12a, which is so called the angle β of a case line of the carcass ply, becomes about 65 to 83 degrees.

The case line of the carcass 14 refers to a line passing through a center of the thickness of the carcass 14 in the cross section in the tire width direction, and refers to a shape of the carcass 14 in the cross section in the tire width direction in an unloaded state, when the tire T is assembled to the proper rim and the predetermined internal pressure is applied. Further, as illustrated in FIG. 1, the angle β of the case line refers to an acute side of an angle of intersection of a tangent line f1 set on the carcass 14 at the side of the bead core 12, for example, within a range from an end part on the outer side in the tire radial direction of the bead core 12 to the top part 12a, and a straight line f2 extending along the tire width direction.

Furthermore, the carcass 14 is suitable for tire sizes with a periphery length of about 1600 mm to 3300 mm between fixing points F, which are fixed by the bead core 12 by rim assembly. The fixing point F refers to a position from the most inward in the tire radial direction of one of the bead cores 12 of the carcass 14 to the most inward in the tire radial direction of the other one of the bead cores 12.

Incidentally, the periphery length of the carcass 14 refers to a length of the carcass ply passing through the center of the thickness of the carcass body portion, when there are multiple carcass plies.

The proper rim refers to standard rims (Measuring Rim in the STANDARDS MANUAL by ETRTO and Designing Rim in the YEAR BOOK by TRA) in the applicable size described in industrial standards valid for regions where the tire is produced and used, such as JATMA YEAR BOOK by the Japan Automobile Tyre Association (JATMA) in Japan, STANDARDS MANUAL by the European Tyre and Rim Technical Organisation (ETRTO) in Europe, and YEAR BOOK by the Tire and Rim Association, Inc. (TRA) in the United States of America.

The bead filler 20 is provided on the outer side in the tire radial direction of the carcass 14 folded back around the bead core 12, so as to fill a space between the folded carcass 14.

Furthermore, the bead cover rubber 21 is provided between the bead core 12 and the carcass 14. The bead cover rubber 21 is arranged such that, for example, it starts at from a start end 21A on the inner side in the tire radial direction of the bead core 12, extends along the inner side in the tire width direction of the bead core 12 toward the outer side in the tire radial direction, extends past an end on the outer end in the tire radial direction of the bead core 12 and terminates at a terminal end 21B, and wraps a half on the inner side in the tire width direction of the bead core 12. It is preferable to make the bead cover rubber 21by a rubber member containing 5 to 50% styrene-butadiene rubber when the polymer is 100. A thickness of the bead cover rubber 21 is set so that, when the carcass 14 falls down toward the outer side in the tire width direction and is pressed against the bead core 12 due to a load applied to the tire T, a predetermined thickness is maintained. For example, the thickness of the bead cover rubber 21 may be 1.0 mm to 5.0 mm. By forming the bead cover rubber 21 in this manner, the bead cover rubber 21 can be made highly elastic and the carcass 14 can be prevented from contacting the bead core 12.

The wire chafer 18 is provided on the inner circumference side of the carcass 14 wound around the bead core 12. The wire chafer 18 is provided to wrap the carcass 14 wound around the bead core 12 from the outside, and extends along the carcass 14 from the inner circumference side to the outer circumference side of the carcass 14. The wire chafer 18 will be described in detail later.

The nylon chafer 17 is provided on a further inner circumference side of the wire chafer 18 provided on the inner circumference side of the carcass 14. The nylon chafer 17 is a member formed by a nylon cord, and as illustrated in FIG. 2A, in the cross-sectional view, for example, the nylon chafer 17 is provided in such a manner that one end 17A starts from the outer side in the radial direction outer than an upper end 62 on the outer side in the radial direction of a later-described upper side chafer 60 and the other end 17B reaches the lower end of the bead core 12, so as to cover a part of a later-described lower side chafer 70. By providing the nylon chafer 17 on the inner circumference side of the wire chafer 18 along the carcass 14, fall-down deformation in the bead portion can be suppressed.

The rim cushion rubber 22 is provided from an innermost side in the tire radial direction to the outer side in the tire width direction, so as to cover the outer sides of the lower side chafer 70 and the nylon chafer 17, whereby the adhesion to the applicable rim and the structure in the bead portion can be protected. On the outer side in the tire radial direction of the rim cushion rubber 22, the side rubber 26 is continuously provided along the carcass 14.

At a crown part of the carcass 14, that is., at a position of the carcass 14 corresponding to the tread portion in the tire T, the belt layer 16 is provided, which is configured of one or more belt plies (sixteen plies, 16a-16f in the present embodiment). The belt under-rubber 24 is provided between end parts of the belt plies 16c; 16d, which protrude in the tire width direction, of the belt layer 16, and the outer circumferential surface of the carcass 14. The base rubber 28 and the tread rubber 30 formed with a predetermined tread pattern are overlaid on the outer side in the tire radial direction of the belt layer 16.

The base rubber 28 and the tread rubber 30 extend outwardly in the tire width direction so as to form an outline shape of the tire and cover the outer side in the tire radial direction of the side rubber 26.

The inner liner 32 is provided on the inner circumference side of the carcass 14. The inner liner 32 extends between the rim cushion rubbers 22 provided on the right and left bead portions, covers the entire inner circumference of the carcass 14, and provides airtightness as a pneumatic tire.

As illustrated in FIGS. 1 and 2A, the wire chafer 18 according to the present embodiment is separated at a side on the inner side in the tire width direction of the bead core 12 into the upper side wire chafer 60 (hereinafter simply referred to as the upper side chafer) that extends along the carcass 14 from the side of the bead core 12 toward the outer side in the tire radial direction, and the lower side chafer 70 (hereinafter referred to as the "lower side chafer") that extends along the carcass 14 from the side of the bead core 12 toward the inner side in the tire radial direction. In the following description, the end part on the bead core 12 side of the upper side chafer 60 is referred to as a lower end 61, and the end part on the opposite side is referred to as the upper end 62. Further, the end of the lower side chafer 70 opposite the lower end 61 of the upper side chafer 60 is referred to as an inner end 71, and the end on the opposite side is referred to as an outer end 72.

FIG. 4 is a schematic diagram illustrating a crossing state of carcass cords and chafer cords. As illustrated in FIG. 4, the upper side chafer 60 and the lower side chafer 70 are formed such that the chafer cords 18s intersect the carcass cords 14s, which extend in the tire radial direction, at a predetermined angle θ. The angle θ may be set in a range of 40 to 65 degrees, for example. By setting the angle θ of the chafer cords 18s in this manner, the chafer cords 18s act to suppress a restraining force (tension) that tries to pull out the carcass cords 14s along with ground contact and a movement of the rubber around the carcass cords 14s to antagonize the restraining force, whereby the rigidity at the bead portion can be enhanced.

The above-mentioned separation at the side does not mean that the lower end 61 of the upper side chafer 60 and the inner end 71 of the lower side chafer 70 are necessarily included in a range X in which the bead core 12 is projected in the tire width direction. For example, there may be a state in which both the lower end 61 of the upper side chafer 60 and the inner end 71 of the lower side chafer 70 are included in the aforementioned range X, a state in which only one of the ends is included, or a state in which the both ends are not included. The projected range X refers to a range between a straight line that passes an upper end in the tire radial direction of the bead core 12 and extends in the tire width direction and a straight line that passes a lower end in the tire radial direction of the bead core 12 and extends in the tire width direction.

In other words, it is sufficient enough that the aforementioned rang X in which the bead core 12 is projected.is included in a discontinuous section between the upper side chafer 60 and the lower side chafer 70.

For example, a position, at which the wire chafer 18 is separated into the upper side chafer 60 and the lower side chafer 70, is determined in advance by analysis or the like so that a difference between a maximum value and a minimum value of the tension, which acts on the carcass 14 when the tire makes one rotation, is minimized, and the aforementioned discontinuous section may be set to include the determined position.

At this time, with respect to a relationship between the lower end 61 of the upper side chafer 60 and the inner end 71 of the lower side chafer 70, the both ends may be butted with each other, or may be separated by a predetermined distance along the carcass 14. Preferably, a distance L that separates the lower end 61 of the upper side chafer 60 from the inner end 71 of the lower side chafer 70 and that forms the discontinuous section, may be about 5 mm to 60 mm, for example. Incidentally, the distance L is a periphery length along the carcass 14.

In the above-described range, when the tire T was grounded and the carcass 14 fell down toward the tire width direction, and a force that separates the lower end 61 of the upper side chafer 60 from the inner end 71 of the lower side chafer 70 was applied, the rubber interposed between the lower end 61 of the upper side chafer 60 and the inner end 71 of the lower side chafer 70 allows the deformation thereof, hence peeling off of the lower end 61 of the upper side chafer 60 and the inner end 71 of the lower side chafer 70 from the interposed rubber can be prevented.

More preferably, the inner end 71 of the lower side chafer 70 may be set lower in the tire radial direction than the top part 12a that faces the tire inner circumference side of the bead core 12. Further, as illustrated in Fig. 2, in a case where the bead core 12 has a plurality of top parts 12a; 12b; 12f, the inner end 71 of the lower side chafer 70 may be set equal to or lower than the top part 12b located on the lower side in the tire radial direction.

FIG. 2B is a diagram illustrating another form of the structure of the bead portion. The structure of the bead portion is not limited to those illustrated in FIGS. 1 and 2A. For example, as illustrated in FIG. 2B, the nylon chafer 19 may be provided in place of the bead cover rubber 21. With this, compared to a case where the bead cover rubber 21 is arranged between the carcass 14 and the bead core 12, a time until the carcass 14 contacts the bead core 12 can be made longer.

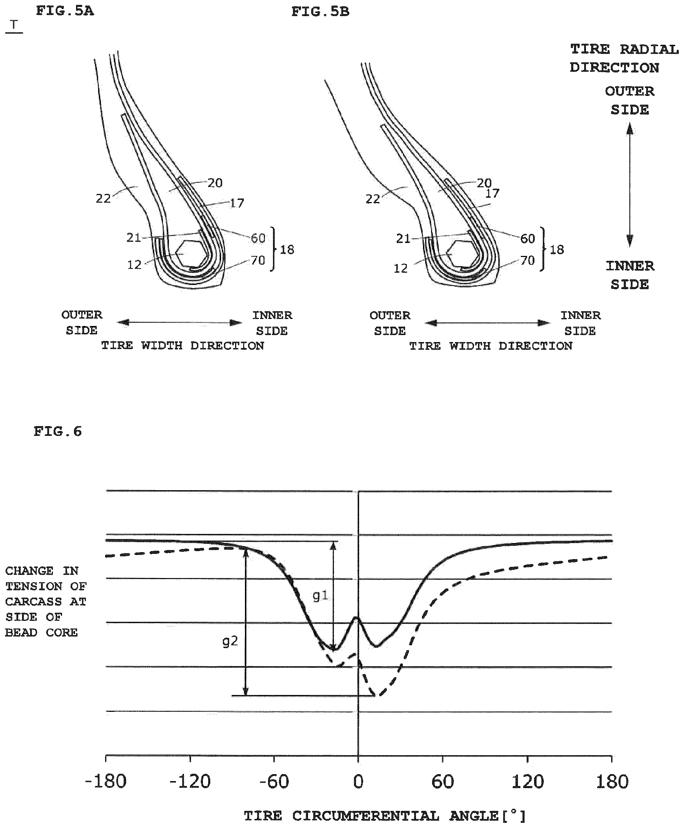

FIGS. 5A and 5B are conceptual diagrams illustrating a deformation shape of the bead portion when a load is applied.

As described above, by providing the wire chafer 18, it is possible to prevent, while reinforcing the bead portion, excessive fall-down of the carcass 14 and improve the load bearing performance The fall-down of the carcass 14 refers to a state in which the carcass 14 inclines toward the bead core 12, as illustrated in FIG. 5B, as the carcass 14 fixed by the bead core 12 is pushed out, from the ungrounded state illustrated in FIG. 5A, toward the tire width direction due to the ground contact.

Further, by separating the wire chafer 18 into the upper side chafer 60 and the lower side chafer 70 and providing to avoid the sides of the top parts 12a to 12c of the bead core 12, it is possible to prevent the wire chafer 18 from pushing the carcass 14 toward the top parts 12a to 12c when the tire T is brought into contact with the ground. This means that the carcass 14 is not pushed against the bead core. In other words, a risk that the carcass 14 contacts the bead core 12 can be reduced.

The lower side chafer 70 may be set in such a manner as to extend the inner end 71 from more inner side in the tire width direction than the fixing point F of the carcass 14. By setting the position of the lower side chafer 70 in this manner, one end side of the lower side chafer 70 is brought into a state of being restrained by the bead core 12, thus can support the fall-down of the carcass 14 from the outside.

By extending the upper side chafer 60 along the carcass 14 so as to include the terminal end 21B of the bead cover rubber 21 in the tire radial direction, the upper side chafer 60 can support, together with the bead cover rubber 21, the fall-down of the carcass 14 from the inner circumference side.

As a form of separation, for example, there may be considered a method of separation by overlapping the end part of the upper side chafer 60 and the end part of the lower side chafer 70. However, it is conceivable that, due to the deformation during ground contact, a shear force is generated in a range where the upper side chafer 60 and the lower side chafer 70 overlap, and the rubber interposed between the upper side chafer 60 and the lower side chafer 70 is peeled off from the upper side chafer 60 or from the lower side chafer 70, which causes a structural break. Therefore, it is preferable to separate the wire chafers 18 along the carcass 14 with a predetermined distance therebetween so that the upper side chafer 60 and the lower side chafer 70 do not overlap.

As described, by separating the wire chafer 18 into the upper side chafer 60 and the lower side chafer 70 and providing them along the carcass 14, the deformation occurred when subjected to a load can be suppressed and a load amplitude on the carcass 14 can be minimized, thus the load bearing performance can be improved. As a result, the durability performance of the tire T can be improved.

### Embodiments.

Next, the present invention will be described in detail with embodiments, however, the present invention is not limited in any way by these examples. As an embodiment, the structure described above is applied to a tire for a heavy-load vehicle with a tire size of 59/80R63.

Dimensions and a positional relationship of the wire chafer 18 (upper side chafer 60 and lower side chafer 70), the carcass 14, the bead core 12 and other components forming the bead portion may be set as follows. The number of cord driving (per 25 mm) of the upper side chafer 60 and the lower side chafer 70 is preferably 7 to 14. A cord diameter of the upper side chafer 60 and the lower side chafer 70 is preferably 0.9 mm to 2.0 mm. A periphery length of the upper side chafer 60 is preferably 30mm to 70mm. A periphery length of the lower side chafer 70 is preferably 130mm to 220mm. A separation distance between the upper side chafer 60 and the lower side chafer 70 is preferably 5 mm to 60 mm. An angle of the chafer cord 18s with respect to the carcass cord 14s is preferably 40 to 65 degrees. The number of cord driving (per 25 mm) of the carcass cords 14s in the carcass 14 is preferably 1.5 to 4. A diameter of the carcass cord is preferably 2 mm to 5.5 mm. An angle of the case line is preferably 65 to 83 degrees. A periphery length of the carcass 14 between fixing points A-A is preferably 1,600 mm to 3,300 mm. The number of turns of the bead cord 13 is preferably 150 to 900 (7 to 28 for an upper side or a lower side). The innermost angle α of the bead core 12 is preferably 100 to 140 degrees. The bead cover rubber 21 (percentage when polymer is 100) is preferably 5 to 50 phr.

The periphery length of the upper side chafer 60 is set to 50 mm and the periphery length of the lower side chafer 70 is set to 170 mm. The lower end 61 of the upper side chafer 60 and the inner end 71 of the lower side chafer 70 are separated by 30 mm. This separation distance is a length of the extension along the carcass 14. The upper side chafer 60 and the lower side chafer 70 are formed with the chafer cords having a diameter of 1.82 mm so that the number of chafer cord driving becomes 8 to 9 per 25 mm. With respect to the upper side chafer 60 and the lower side chafer 70, the angle θ at which the chafer cord 18s crosses the carcass cord 14s extending in the tire radial direction is set to 55 degrees (see FIG. 4).

With respect to the carcass 14, the carcass cord diameter is set to 4.57 mm, the number of carcass cord driving is set to 1.8 per 25 mm, and the periphery length from the fixing point F at one end to the fixing point F at the other end is set to 3197 mm. Further, the carcass 14 is formed so that the angle β of the case line at the side of the bead core 12 is set to 75 degrees (see FIG. 2).

The bead core 12 is formed in the hexagonal shape as described above, and the number of windings of the bead wire is set to 840. The bead core 12 is so arranged that one part 12a faces the inner side and one top part 12a faces the outer side in the tire width direction. In the state of being arranged in this manner, the sides 12A; 12B extending along the tire width direction of the bead core 12 are respectively formed with 24 bead wires. Further, the bead core 12 is so formed that 37 bead wires are aligned in a straight line between the aforementioned top part 12a on the inner side in the tire width direction and the top part 12d facing outward. The angle α of the aforementioned top part 12a of the bead core 12, which faces the inner side in the tire width direction, is 120 degrees.

FIG. 6 is a diagram illustrating a result of analysis, by Finite Element Method (FEM), of change in the load applied to the carcass 14, with the tire configured as described above. In FIG. 6, the solid line g1 indicates a change in the load applied to the tire according to the present embodiment, and the dashed line g2 indicates a change in the load applied to the carcass 14 when the wire chafer 18 is used as a single piece without being separated into the upper side chafer 60 and the lower side chafer 70 as in the present embodiment.

As illustrated in FIG. 6, it has been found that, with the tire according to the present embodiment, the amplitude (load amplitude) of the change in the load applied to the carcass 14 becomes smaller compared to the case where the wire chafer 18 is not separated. In other words, it has been found that, with the tire T according to the present embodiment, even with the same load, fall-down of the carcass 14 becomes small. Therefore, in a state in which the fall-down similar to the case where the wire chafer 18 is not separated is allowed, the tire T according to the present embodiment can tolerate a larger load.

Incidentally, in a case where the structure of the bead portion according to the present embodiment is applied to other tire sizes, the same effect can be obtained by analogously changing the relationship of the dimensions and arrangement of the upper side chafer 60 and the lower side chafer 70, the carcass 14, and the bead core 12, from the aforementioned range based on the aforementioned 59/80R63. The same effect can be obtained by varying the dimensions and arrangement of the upper side chafer 60 and the lower side chafer 70, carcass 14, and bead core 12.

In summary, the present invention can be described as follows.
That is, as a configuration of the tire, a tire includes:
a pair of bead cores formed in a polygonal shape in cross-sectional view; a carcass toroidally straddling between the bead cores and folded back around the bead cores; and a wire chafer extending along the carcass so as to cover the carcass folded back around the bead cores from an inner side in a radial direction of a tire, in which, at a side on a tire inner circumference side of the bead core, the wire chafer is provided by being separated into an upper side wire chafer and a lower side wire chafer.

According to this configuration, the amount of deformation (amplitude) of the bead portion can be minimized. Hence, the load bearing performance can be improved without degrading the durability of the tire.

As another configuration of the tire, the upper side wire chafer and the lower side wire chafer may be separated within a range from the upper end to the lower end of the bead core.

Further, as another configuration of the tire, the upper side wire chafer and the lower side wire chafer may be separated at, as a boundary, a top part of the bead core located on an innermost side in a tire width direction among top parts of the bead core that face inwardly in the tire width direction.

### REFERENCE SIGN LIST

12: Bead core, 12a: Top part, 14: Carcass, 16: Belt layer,
17: Nylon chafer, 17B: Upper end,
18: Wire chafer, 20: Bead filler,
21 Bead cover rubber, 22: Rim cushion rubber,
24: Belt under rubber, 26: Side rubber, 28: Base rubber,
30: Tread rubber, 32: Inner liner,
60: Upper side chafer (upper side wire chafer),
61: Lower end, 62: Upper end,
70: Lower side chafer (lower side wire chafer),
71: Inner end, 72: Outer end,
CL: Tire center, F: Fixing point, g1: Solid line, g2: Dashed line
T: Tire, Tm: Ground contact surface, Tt: End part, Wmax: Maximum width part.

## Claims

1. A tire comprising:
a pair of bead cores (12) formed in a polygonal shape in cross-sectional view;
a carcass (14) toroidally straddling between the bead cores (12) and folded back around the bead cores (12);
a wire chafer (18) extending along the carcass (14) so as to cover the carcass (14) folded back around the bead cores (12) from an inner side in a radial direction of a tire, the wire chafer (18) being provided on an inner circumference side of the carcass (14), and
a nylon chafer (17) that is provided as a nylon cord, the nylon chafer (17) being provided at an inner circumference side of the wire chafer (18),
wherein, at a side on a tire inner circumference side of the bead core (12), the wire chafer is provided by being separated into an upper side wire chafer (60) and a lower side wire chafer (70),
wherein the upper side wire chafer (60) and the lower side wire chafer (70) are separated at, as a boundary, a top part of the bead core located on an innermost side in a tire width direction among top parts of the bead core (12) that face inwardly in the tire width direction, and
wherein a first end (17A) of the nylon chafer (17) is disposed radially outwards of an upper end (62) of the upper side wire chafer (60) in the tire radial direction, and a second end (17B) of the nylon chafer (17) reaches a lower end of the bead core (12) so as to cover a part of the lower side wire chafer (70).

2. The tire according to claim 1, wherein the upper side wire chafer (60) and the lower side wire chafer (70) are separated within a range from an upper end to a lower end of the bead core.

## Patentansprüche

1. Reifen, der Folgendes umfasst:
ein Paar von Wulstkernen (12), die in einer Querschnittsansicht in einer vieleckigen Gestalt geformt sind;
eine Karkasse (14), die sich kreisringförmig zwischen den Wulstkernen (12) spannt und um die Wulstkerne (12) zurückgeschlagen ist;
ein Draht-Wulstschutzband (18), das sich so entlang der Karkasse (14) erstreckt, dass es die Karkasse (14), die um die Wulstkerne (12) zurückgeschlagen ist, von einer in einer Radialrichtung eines Reifens inneren Seite bedeckt, wobei das Draht-Wulstschutzband (18) auf einer Innenumfangsseite der Karkasse (14) bereitgestellt ist, und
ein Nylon-Wulstschutzband (17), das als ein Nylonkord bereitgestellt ist, wobei das Nylon-Wulstschutzband (17) an einer Innenumfangsseite des Draht-Wulstschutzbandes (18) bereitgestellt ist,
wobei, an einer Seite auf einer Reifen-Innenumfangsseite des Wulstkerns (12), das Draht-Wulstschutzband dadurch bereitgestellt ist, dass es in ein Oberseiten-Draht-Wulstschutzband (60) und ein Unterseiten-Draht-Wulstschutzband (70) getrennt ist,
wobei das Oberseiten-Draht-Wulstschutzband (60) und das Unterseiten-Draht-Wulstschutzband (70) an, als einer Grenze, einem oberen Teil des Wulstkerns getrennt sind, der sich auf einer in einer Reifenbreitenrichtung innersten Seite unter oberen Teilen des Wulstkerns (12) befindet, die in der Reifenbreitenrichtung nach innen gewandt sind, und
wobei ein erstes Ende (17A) des Nylon-Wulstschutzbandes (17) in Radialrichtung außerhalb eines oberen Endes (62) des Oberseiten-Draht-Wulstschutzbandes (60) in der Reifenradialrichtung angeordnet ist, und ein zweites Ende (17B) des Nylon-Wulstschutzbandes (17) ein unteres Ende des Wulstkerns (12) erreicht, um so einen Teil des Unterseiten-Draht-Wulstschutzbandes (70) zu bedecken.

2. Reifen nach Anspruch 1, wobei das Oberseiten-Draht-Wulstschutzband (60) und das Unterseiten-Draht-Wulstschutzband (70) innerhalb eines Bereichs von einem oberen Ende bis zu einem unteren Ende des Wulstkerns getrennt sind.

## Revendications

1. Pneumatique comprenant :
une paire de tringles de talon (12) formées dans une configuration polygonale dans une vue en coupe transversale ;
une carcasse (14) chevauchant de manière toroïdale entre les tringles de talon (12) et repliée autour des tringles de talon (12) ;
une bandelette-talon en fil métallique (18) s'étendant le long de la carcasse (14) de façon à recouvrir la carcasse (14) repliée autour des tringles de talon (12) à partir d'un côté intérieur dans une direction radiale d'un pneumatique, la bandelette-talon en fil métallique (18) étant fournie sur un côté intérieur de circonférence de la carcasse (14), et
une bandelette-talon en nylon (17) qui est fournie sous forme d'un fil de nylon, la bandelette-talon en nylon (17) étant fournie sur un côté intérieur de circonférence de la bandelette-talon en fil métallique (18),
dans lequel, au niveau d'un côté sur un côté intérieur de circonférence du pneumatique de la tringle de talon (12), la bandelette-talon en fil métallique est fournie en étant séparée en une bandelette-talon en fil métallique de côté supérieur (60) et une bandelette-talon en fil métallique de côté inférieur (70),
dans lequel la bandelette-talon en fil métallique de côté supérieur (60) et la bandelette-talon en fil métallique de côté inférieur (70) sont séparées au niveau, à titre de limite, d'une partie supérieure de la tringle de talon située sur un côté le plus à l'intérieur dans une direction de largeur du pneumatique parmi des parties supérieures de la tringle de talon (12) qui sont orientées vers l'intérieur dans la direction de largeur du pneumatique, et
dans lequel une première extrémité (17A) de la bandelette-talon en nylon (17) est disposée radialement à l'extérieur d'une extrémité supérieure (62) de la bandelette-talon en fil métallique de côté supérieur (60) dans la direction radiale du pneumatique, et une deuxième extrémité (17B) de la bandelette-talon en nylon (17) atteint une extrémité inférieure de la tringle de talon (12) de façon à recouvrir une partie de la bandelette-talon en fil métallique de côté inférieur (70).

2. Pneumatique selon la revendication 1, dans lequel la bandelette-talon en fil métallique de côté supérieur (60) et la bandelette-talon en fil métallique de côté inférieur (70) sont séparées à l'intérieur d'une plage allant d'une extrémité supérieure à une extrémité inférieure de la tringle de talon.
